# EUROPEAN PATENT SPECIFICATION

(11) **EP 2 997 096 B1**
(45) Date of publication and mention of the grant of the patent: **17.10.2018**
(21) Application number: 14725512.9
(22) Date of filing: 14.05.2014
(51) Int. Cl.: C09D 11/101, C09D 11/38

(54) **A PRINTING INK**
DRUCKTINTE
ENCRE D'IMPRESSION

(30) Priority: 14.05.2013 GB 201308655
(43) Date of publication of application: 23.03.2016
(73) Proprietor: Sericol Limited, Broadstairs, Kent CT10 2LE (GB)
(72) Inventor: OSBORNE, Gemma, Broadstairs Kent CT10 2LE (GB); SLATER, Sean, Broadstairs Kent CT10 2LE (GB); WOOLRICH, Brian, Broadstairs Kent CT10 2LE (GB)
(74) Representative: Busher, Samantha Jane
(86) International application number: PCT/GB2014/051473
(87) International publication number: WO 2014/184548

(56) References cited:
- EP-A1- 2 371 912
- JP-A- 2008 195 926
- US-A- 3 932 346
- US-A- 3 956 235
- US-A1- 2012 189 822

## Description

This invention relates to a printing ink and in particular an ink which achieves a balance between increased shelf-life/storage stability, superior performance/end-film properties and fast curing speed using low-intensity irradiation.

In inkjet printing, minute droplets of black, white or coloured ink are ejected in a controlled manner from one or more reservoirs or printing heads through narrow nozzles on to a substrate which is moving relative to the reservoirs. The ejected ink forms an image on the substrate. For high-speed printing, the inks must flow rapidly from the printing heads, and, to ensure that this happens, they must have in use a low viscosity, typically below 100 mPas at 25°C although in most applications the viscosity should be below 50 mPas, and often below 25 mPas. Typically, when ejected through the nozzles, the ink has a viscosity of less than 25 mPas, preferably 5-15 mPas and ideally 10.5 mPas at the jetting temperature which is often elevated to about 40°C (the ink might have a much higher viscosity at ambient temperature). The inks must also be resistant to drying or crusting in the reservoirs or nozzles.

For these reasons, inkjet inks for application at or near ambient temperatures are commonly formulated to contain a large proportion of a mobile liquid vehicle or solvent. In one common type of inkjet ink this liquid is water - see for example the paper by Henry R. Kang in the Journal of Imaging Science, 35(3), pp. 179-188 (1991). In those systems, great effort must be made to ensure the inks do not dry in the head due to water evaporation. In another common type, the liquid is a low-boiling solvent or mixture of solvents - see, for example, EP 0 314 403 and EP 0 424 714.

Unfortunately, inkjet inks that include a large proportion of water or solvent cannot be handled after printing until the inks have dried, either by evaporation of the solvent or its absorption into the substrate. This drying process is often slow and in many cases (for example, when printing on to a heat-sensitive substrate such as paper) cannot be accelerated.

Another type of inkjet ink contains unsaturated organic compounds, termed monomers, which polymerise by irradiation, commonly with ultraviolet light, in the presence of a photoinitiator. This type of ink has the advantage that it is not necessary to evaporate the liquid phase to dry the print; instead the print is exposed to radiation to cure or harden it, a process, which is more rapid than evaporation of solvent at moderate temperatures. In such inkjet inks, it is necessary to use monomers possessing a low viscosity.

Inkjet inks based on curable components can contain monofunctional and multifunctional components. The monofunctional components are typically soft, flexible and provide good adhesion properties while multifunctional components typically provide good cure and surface hardness.

The time required to cure inkjet inks based on curable components is important and this varies greatly depending on the intensity of the radiation. It is advantageous to decrease the intensity of the radiation, for example using a 385 nm LED, for cost and environmental reasons. However, on decreasing the intensity of the radiation, the time taken to cure the inkjet inks based on such curable components increases and hence the speed of the cure decreases. This is problematic in the industry where the time taken to provide the final print is vital for efficiency.

In order to increase cure speed using low-intensity radiation, it is known to use a higher concentration of radiation-curable monomers and a photoinitiator. Furthermore, it is known to increase the reactivity of the photoinitiator to increase the cure speed; and hence it is known to include reactive photoinitiators such as 2,4,6-trimethylbenzoyl-diphenyl-phosphine oxide (TPO), bis(2,6-dimethylbenzoyl)-2,4,4-trimethylpentylphosphine oxide (Irg 819), ethyl-2,4,6-trimethylbenzoyl-phenyl-phosphine oxide (liquid TPO) and/or ITX. It is also known to increase the reactivity of the radiation-curable monomers to increase cure speed and hence, it is known to include reactive monomers, such as an N-vinyl amide. The inclusion of an N-vinyl amide, such as N-vinyl caprolactam (NVC), to an inkjet ink also has the added advantage of providing an inkjet ink having superior performance and end-film properties. However, the inclusion of such components at a higher concentration and having increased reactivity means that the ink is less stable which decreases the shelf-life of the ink.

In this regard, inkjet inks comprising such reactive components at high concentration suffer from the drawback of poor shelf-life and instability issues. For example, current inkjet inks comprising an N-vinyl amide have a shelf-life of around 6 months up to a maximum shelf-life of 2 years. Standard inkjet inks, which do not have N-vinyl amide present in the ink, have a longer shelf-life but do not have a sufficiently fast cure speed at low-intensity radiation which is associated with inks formulated with an N-vinyl amide.

There is therefore a need in the art for inks which achieve a balance between increased shelf-life/storage stability, superior performance and end-film properties and an increased cure speed using low-intensity radiation.

Accordingly, the present invention provides an inkjet ink comprising radiation-curable (meth)acrylate monomer, N-vinyl amide, an acyl phosphine oxide UV photoinitiator and a carbamodithioic acid or a salt or thioester thereof.

The present invention will now be described with reference to the accompanying drawings, in which:
Fig. 1 shows a graph of the viscosity change against accelerated temperature storage (60°C) for yellow inkjet inks comprising NVC and UV12, UV1 or UV2;
Fig. 2 shows a graph of the viscosity change against accelerated temperature storage (60°C) for black inkjet inks comprising NVC and UV12 or UV1;
Fig. 3 shows a graph of the viscosity change against accelerated temperature storage (60°C) for cyan inkjet inks comprising NVC and UV12, UV1 or UV2;
Fig. 4 shows a graph of the viscosity change against accelerated temperature storage (60°C) for magenta inkjet inks comprising NVC and UV12 or UV1;
Fig. 5 shows a graph of the viscosity change against accelerated temperature storage (50°C) for yellow inkjet inks comprising NVC and UV12, UV1 or UV2;
Fig. 6 shows a graph of the viscosity change against accelerated temperature storage (50°C) for black inkjet inks comprising NVC and UV12 or UV1;
Fig. 7 shows a graph of the viscosity change against accelerated temperature storage (50°C) for cyan inkjet inks comprising NVC and UV12, UV1 or UV2; and
Fig. 8 shows a graph of the viscosity change against accelerated temperature storage (50°C) for magenta inkjet inks comprising NVC and UV12, UV1 or UV2.

It has been found that inkjet inks comprising a radiation-curable (meth)acrylate monomer, an N-vinyl amide and an acyl phosphine oxide UV photoinitiator especially suffer from instability issues and poor shelf-life. This is because there are excess free radicals generated from the acyl phosphine oxide UV photoinitiator and also by the interaction between phosphorous radicals from the acyl phosphine oxide UV photoinitiator with the N-vinyl amide, such as NVC. Such free radicals can initiate a premature and undesirable polymerisation of the radiation-curable (meth)acrylate monomers and remaining N-vinyl amide species.

It has surprisingly been found by the inventors that the addition of a carbamodithioic acid or a salt or thioester thereof improves stability of the inkjet ink and improves shelf-life and storage stability by quenching these excess free radicals. It is possible to achieve such advantages whilst maintaining the UV sensitivity and performance of the product.

Without wishing to be bound by theory, it has been found that free radicals, which are generated from the acyl phosphine oxide UV photoinitiator and/or the interaction between phosphorous radicals from the acyl phosphine oxide UV photoinitiator with the N-vinyl amide, such as NVC, which produces further free radicals, interact with the (meth)acrylate monomers. This causes instability by increasing viscosity and resulting in gelling which significantly reduces shelf-life. However, such radicals are stabilised by the carbamodithioic acid or a salt or thioester thereof. In this respect, the carbamodithioic acid or a salt or thioester thereof quenches the excess free radicals. It is thought that the carbon atom of the carbamodithioic acid or a salt or thioester thereof quenches the radical and distributes the charge uniformly between the sulfur atoms, generating a stable species and thus preventing propagation.

Hence, the addition of a carbamodithioic acid or a salt or thioester thereof permits an extended shelf-life of inkjet inks comprising an N-vinyl amide and an acyl phosphine oxide UV photoinitiator, beyond the current 6 months to 2 years. The inkjet inks of the present invention also display superior performance and end-film properties associated with inks formulated with an N-vinyl amide and increased cure speed at low-intensity radiation but do not suffer from the instability and shelf-life issues.

Improved stability of the inkjet inks will enable safe handling of the product at elevated temperatures for shipping and storage. Furthermore, improved stability will prevent failure of inkjet inks within expensive printer ink delivery systems and print heads. The inkjet inks of the present invention will also reduce supply-chain costs.

The inkjet ink of the present invention comprises an N-vinyl amide. N-Vinyl amides are well-known monomers in the art and a detailed description is therefore not required. N-Vinyl amides have a vinyl group attached to the nitrogen atom of an amide which may be further substituted in an analogous manner to the (meth)acrylate monomers.

Preferred examples are N-vinyl caprolactam (NVC) and N-vinyl pyrrolidone (NVP): 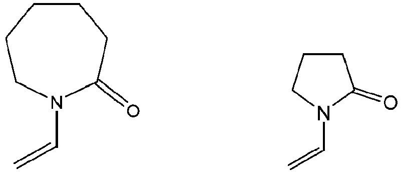 with NVC being particularly preferred.

Various different grades of N-vinyl amide may be used in the present invention and are known in the art. For example, NVC may be present as NVC OH-TEMPO, which is NVC stabilised with the stabiliser OH-TEMPO at 20 ppm. OH-TEMPO has the following formula:

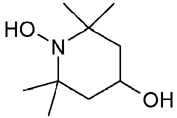

Additional grades of NVC stabilised with kerobit BPD (from 1 ppm to 1.0% in NVC) may be used. BPD stabiliser has the following formula:

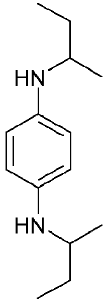

The total amount of N-vinyl amide is from 5 to 45 wt%, based on the total weight of the ink. Preferably, the N-vinyl amide is present from 10 to 40 wt%, more preferably from 15 to 35 wt%, based on the total weight of the ink.

The inkjet ink of the present invention further comprises radiation-curable (meth)acrylate monomers. Suitable free-radical polymerisable (meth)acrylate monomers are well known in the art.

The monomers may possess different degrees of functionality, and a mixture including combinations of mono, di, tri and higher functionality monomers may be used.

Monofunctional (meth)acrylate monomers are well known in the art and are preferably the esters of acrylic acid. Preferred examples include phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA), lauryl acrylate and mixtures thereof.

The preferred examples of monofunctional (meth)acrylate monomers have the following chemical structures:

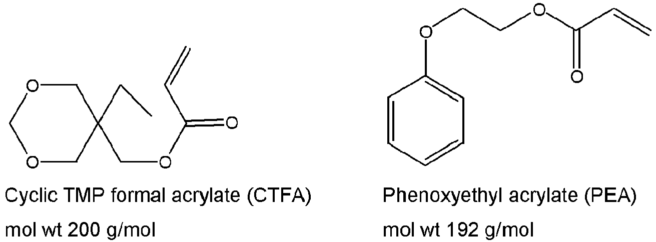

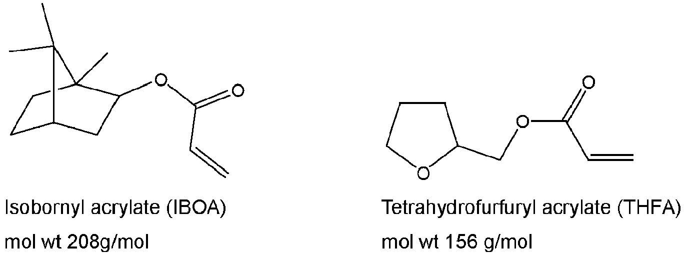

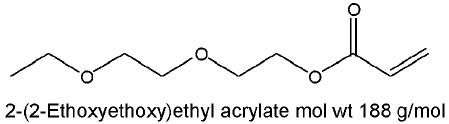

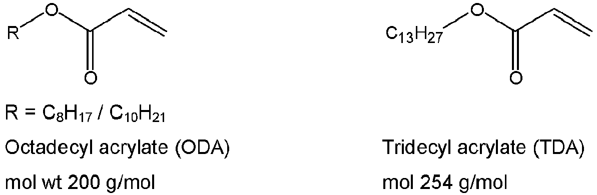

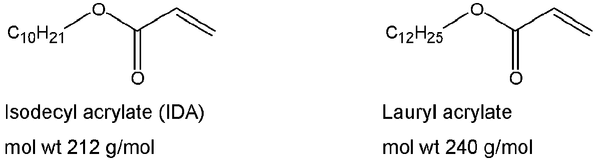

The substituents of the monofunctional monomers are not limited other than by the constraints imposed by the use in an inkjet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

Multifunctional (meth)acrylate monomers are also well known in the art and have a functionality of two or higher. Suitable multifunctional (meth)acrylate monomers include di-, tri- and tetrafunctional monomers (functionalities of two, three or four are preferred). Preferably this monomer is a difunctional or trifunctional monomer.

Examples of the multifunctional acrylate monomers that may be included in the inkjet inks include hexanediol diacrylate, trimethylolpropane triacrylate, pentaerythritol triacrylate, polyethylene glycol diacrylate (for example tetraethylene glycol diacrylate), dipropylene glycol diacrylate, tri(propylene glycol) triacrylate, neopentyl glycol diacrylate, bis(pentaerythritol) hexaacrylate, and the acrylate esters of ethoxylated or propoxylated glycols and polyols, for example, propoxylated neopentyl glycol diacrylate, ethoxylated trimethylolpropane triacrylate, and mixtures thereof.

Suitable multifunctional (meth)acrylate monomers also include esters of methacrylic acid (i.e. methacrylates), such as hexanediol dimethacrylate, trimethylolpropane trimethacrylate, triethyleneglycol dimethacrylate, diethyleneglycol dimethacrylate, ethyleneglycol dimethacrylate, 1,4-butanediol dimethacrylate, dipentaerythritol hexaacrylate and mixtures thereof.

(Meth)acrylate is intended herein to have its standard meaning, i.e. acrylate and/or methacrylate. Mono and multifunctional are also intended to have their standard meanings, i.e. one and two or more groups, respectively, which take part in the polymerisation reaction on curing.

By "radiation-curable" is meant a material that polymerises or crosslinks when exposed to actinic radiation, commonly ultraviolet light, in the presence of a photoinitiator.

The total amount of the radiation-curable (meth)acrylate monomer is from 25 to 70 wt% based on the total weight of the ink. Preferably, the radiation-curable (meth)acrylate monomer is present from 35 to 65 wt%, more preferably from 40 to 60 wt%, even more preferably at least 55 wt%, based on the total weight of the ink.

In addition, the ink also includes an acyl phosphine oxide UV photoinitiator, which, under irradiation by ultraviolet light, initiates the polymerisation of the monomers. The acyl phosphine oxide UV photoinitiator of the present invention produces free radicals on irradiation and is hence a free radical photoinitiator. An acyl phosphine oxide UV photoinitiator comprises a phosphine oxide group substituted with acyl. Preferably, the acyl phosphine oxide has the following general formula where R may represent any functional group that enables radical quenching capability and is preferably a phenol, ethyl, ethylphenol or a mixture thereof:

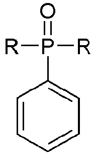

More preferably, the acyl phosphine oxide has the following general formula, where R may represent any functional group that enables radical quenching capability and is preferably a phenol, ethyl, ethylphenol or a mixture thereof:

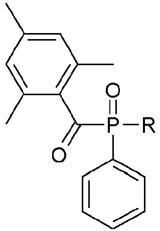

Particularly preferred acyl phosphine oxide UV photoinitiators include 2,4,6-trimethylbenzoyl-diphenyl-phosphine oxide (TPO), bis(2,6-dimethylbenzoyl)-2,4,4-trimethylpentylphosphine oxide (Irg 819), ethyl-2,4,6-trimethylbenzoyl-phenyl-phosphine oxide (liquid TPO) or mixtures thereof.

Such photoinitiators are known and commercially available such as, Irgacure 819 from BASF under the trade name Irgacure and TPO from BASF under the trade name Lucirin.

Preferably the photoinitiator is present from 1 to 20% by weight, more preferably from 3 to 10% by weight, most preferably from 4 to 8% by weight, based on the total weight of the ink.

The ink further comprises carbamodithioic acid or a salt or thioester thereof. As discussed hereinabove, the inclusion of the carbamodithioic acid or a salt or thioester thereof aids stability of UV curable inkjet inks containing an N-vinyl amide and an acyl phosphine oxide UV photoinitiator.

Carbamodithioic acid or a salt or thioester thereof have the following arrangement of atoms:

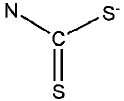

Carbamodithioic acid or a salt or thioester thereof preferably include N,N-dimethyl carbamodithioic acid copper (II) salt (CDMC-O), zinc dibutyldithiocarbamate (butyl zimate) or mixtures thereof, which have the following formulae, respectively:

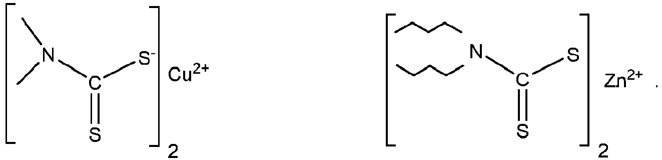

The carbamodithioic acid or a salt or thioester thereof is preferably present in an amount of from 0.05 to 0.2 wt%, more preferably 0.1 to 0.2 wt%, based on the total amount of the inkjet ink. One or more carbamodithioic acid or a salt or thioester thereof may be present in the ink of the present invention. The thioester is typically formed with an alkyl, cycloalkyl or aryl group, as defined hereinabove, and most typically with an alkyl group. It is preferably present in the form of a salt.

Carbamodithioic acid or a salt or thioester thereof are known and are commercially available such as, for example, from Florstab under the trade names UV1 and UV2.

Preferably, UV1 is used in black and magenta inks. The dark brown colour of UV1 makes it less suitable for light/pale colour inks at high concentrations. Preferably, UV2 is used in yellow, clear and cyan inks.

The ink may optionally comprise a radiation-curable oligomer. By "radiation-curable oligomer" is meant an oligomer that includes a polymerisable group and is therefore capable of taking part in the curing reaction. The term "curable oligomer" has its standard meaning in the art, namely that the component is partially reacted to form a pre-polymer having a plurality of repeating monomer units, which is capable of further polymerisation.

The degree of functionality of the oligomer determines the degree of crosslinking and hence the properties of the cured ink. UV-curable oligomers of this type are well known in the art. The oligomers may possess different degrees of functionality, and a mixture including combinations of mono, di, tri and higher functionality oligomers may be used. The oligomer is preferably multifunctional meaning that it contains on average more than one reactive functional group per molecule. Most preferably, they have a functionality of 2-6.

Radiation-curable oligomers suitable for use in the present invention comprise a backbone, for example a polyester, urethane, epoxy or polyether backbone, and one or more radiation polymerisable groups. The oligomer preferably comprises a urethane backbone. The polymerisable group can be any group that is capable of polymerising upon exposure to radiation. Preferably the oligomers are (meth)acrylate oligomers.

Particularly preferred radiation-curable oligomers are urethane acrylate oligomers as these have excellent adhesion and elongation properties. Most preferred are tri-, tetra-, penta-, hexa- or higher functional urethane acrylates, particularly hexafunctional urethane acrylates as these yield films with good solvent resistance.

Other suitable examples of radiation-curable oligomers include epoxy based materials such as bisphenol A epoxy acrylates and epoxy novolac acrylates, which have fast cure speeds and provide cured films with good solvent resistance.

Preferred oligomers have a molecular weight of 450 to 4,000, more preferably 600 to 4,000. Molecular weights (number average) can be calculated if the structure of the oligomer is known or molecular weights can be measured using gel permeation chromatography using polystyrene standards.

In one embodiment the radiation-curable oligomer polymerises by free-radical polymerisation. The radiation-curable oligomer cures upon exposure to radiation in the presence of a photoinitiator to form a crosslinked, solid film. The resulting film has good adhesion to substrates and good solvent resistance. Any radiation-curable oligomer that is compatible with the other ink components and that is capable of curing to form a crosslinked, solid film is suitable for use in the ink. Thus, the ink formulator is able to select from a wide range of suitable oligomers.

Preferred oligomers for use in the invention have a viscosity of 0.5 to 20 Pa.s at 60°C, more preferably 5 to 15 Pa.s at 60°C and most preferably 5 to 10 Pa.s at 60°C. Oligomer viscosities can be measured using an ARG2 rheometer manufactured by T.A. Instruments, which uses a 40 mm oblique / 2° steel cone at 60°C with a shear rate of 25 s⁻¹.

The total amount of the oligomer is preferably from 1 to 12 wt%, based on the total weight of the ink. Preferably the oligomer is present from 2 to 10 wt%, more preferably from 4 to 8 wt%, most preferably from 6 to 9 wt%, based on the total weight of the ink.

The ink may optionally comprise α,β-unsaturated ether monomers, which can polymerise by free-radical polymerisation and may be useful for reducing the viscosity of the ink when used in combination with one or more (meth)acrylate monomers. Examples are well known in the art and include vinyl ethers such as triethylene glycol divinyl ether, diethylene glycol divinyl ether, 1,4-cyclohexanedimethanol divinyl ether and ethylene glycol monovinyl ether. Mixtures of α,β-unsaturated ether monomers may be used.

When present in the inks of the invention, the vinyl ether monomer is preferably present in an amount of 1-20% by weight, more preferably 7-15% by weight, based on the total weight of the ink.

The ink may further comprise N-(meth)acryloyl amines. N-acryloyl amines are also well-known in the art. N-acryloyl amines also have a vinyl group attached to an amide but via the carbonyl carbon atom and again may be further substituted in an analogous manner to the (meth)acrylate monomers. A preferred example is N-acryloylmorpholine (ACMO).

N-acryloyl amines may be included at 3-50% by weight, preferably 5-40% by weight, more preferably 10-30% by weight, based on the total weight of the ink.

The ink can optionally further contain additional photoinitiators, other than the acyl phosphine oxide UV photoinitiators discussed hereinabove, which, under irradiation by UV light, initiates the polymerisation of the curable material. Preferred are photoinitiators which produce free radicals on irradiation (free radical photoinitiators) such as, for example, benzophenone, 1-hydroxycyclohexyl phenyl ketone, 2-benzyl-2-dimethylamino-(4-morpholinophenyl)butan-1-one, benzil dimethylketal or mixtures thereof.

Although the ink of the present invention cures by a free radical mechanism, the ink of the present invention may also be a so-called "hybrid" ink which cures by a radical and cationic mechanism. The inkjet ink of the present invention, in one embodiment, therefore further comprises a cationically curable monomer, such as a vinyl ether, and a cationic photoinitiator, such as an iodonium or sulfonium salt, e.g. diphenyliodonium fluoride and triphenylsulfonium hexafluophosphate. Examples of commercially available cationic initiators are Esacure 1064, Esacure 1187 (Lamberti), Irgacure 250, Irgacure 270, Irgacure 290 (BASF), Uvacure 1600 (Cytec), Speedcure 992 and Speedcure 976 (Lambsons).

Single photoinitiators can be used but systems based on a mixture of different photoinitiators are preferred.

The ink may also contain a passive (or "inert") thermoplastic resin. Passive resins are resins which do not enter into the curing process, i.e. the resin is free of functional groups which polymerise under the curing conditions to which the ink is exposed. In other words, resin is not a radiation-curable material. The resin may be selected from epoxy, polyester, vinyl, ketone, nitrocellulose, phenoxy or acrylate resins, or a mixture thereof and is preferably a poly(methyl (meth)acrylate) resin. The resin has a weight-average molecular weight of 1,500-200,000, as determined by GPC with polystyrene standards as previously described hereinabove.

Passive thermoplastic resin may be included at 1-10% by weight, based on the total weight of the ink.

The ink may be a coloured or a colourless ink. By "colourless" is meant that the ink is free of colorant such that no colour can be detected by the naked eye. Minor amounts of colorant that do not produce colour that can be detected by the eye can be tolerated, however. Typically the amount of colorant present will be less than 0.3% by weight based on the total weight of the ink, preferably less than 0.1%, more preferably less than 0.03%. Colourless inks may also be described as "clear" or "water white". Colourless inks may also be used as a varnish, where it is applied over a coloured ink. For the avoidance of doubt, coloured inks include white inks.

The coloured inks comprise at least one colouring agent. The colouring agent may be either dissolved or dispersed in the liquid medium of the ink. Preferably the colouring agent is a dispersible pigment, of the types known in the art and commercially available such as under the trade-names Paliotol (available from BASF pic), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19, pigment red 202 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 20 weight% or less, preferably 10 weight% or less, more preferably 8 weight% or less and most preferably 2 to 5% by weight, based on the total weight of the ink. A higher concentration of pigment may be required for white inks, however, for example up to and including 30 weight%, or 25 weight% based on the total weight of the ink.

The inks of the present invention dry primarily by curing, i.e. by the polymerisation of the monomers present, as discussed hereinabove, and hence are curable inks. Such inks do not, therefore, require the presence of water or a volatile organic solvent to effect drying of the ink, although the presence of such components may be tolerated. Therefore, the inks of the present invention are preferably substantially free of water and volatile organic solvents. However, trace amounts of volatile organic solvents present, for example, as part of commercially available pigment dispersions, or trace amounts of water inevitably present by absorption from the air may be tolerated in the ink provided they do not adversely affect the cure speed. For example, the ink may comprise less than 5% by weight of water and volatile organic solvents, more preferably less than 2% by weight of water and volatile organic solvents and most preferably less than 1% by weight of water and volatile organic solvents, based on the total weight of the ink.

Other components of types known in the art may be present in the ink to improve the properties or performance. These components may be, for example, surfactants, defoamers, dispersants, synergists for the photoinitiator, reodorants, flow or slip aids, biocides and identifying tracers.

Stabilisers, which stabilise the ink against deterioration by heat or light (other than carbamodithioic acid or a salt or thioester thereof) may also be present in the ink. A combination of one or more carbamodithioic acid or a salt or thioester thereof and one or more other stabilisers may be used. Furthermore, stabilisers (other than one or more carbamodithioic acid or a salt or thioester thereof which is/are intentionally added to the ink) may be present as trace amounts, for example, as part of commercially available (meth)acrylate monomers.

Inkjet inks of the invention exhibit a desirable low viscosity, i.e. 100 mPas or less, preferably 50 mPas or less and most preferably 25 mPas or less at 25°C (although when ejected through the nozzles, the jetting temperature is often elevated to about 40°C). Viscosity may be measured using a Brookfield viscometer fitted with a thermostatically controlled cup and spindle arrangement, such as model LDV1+ with the ULA spindle and cup arrangement at 25°C and spindle speed of 20 rpm.

The present invention also provides a method of inkjet printing using the above-described ink and a substrate having the cured ink thereon. Suitable substrates include styrene, PolyCarb (a polycarbonate), BannerPVC (a PVC), VIVAK (a polyethylene terephthalate glycol modified), polyolefin substrates, such as polyethylene and polypropylene, e.g. PE85 Trans T/C, PE85 White or PP Top White, polyethylene terephthalate (PET) and paper. Polyolefin substrates represent the most difficult of these substrates on which to gain adhesion.

The ink of the present invention is preferably cured by ultraviolet irradiation and is suitable for application by inkjet printing. The wavelength of the actinic radiation is typically 350-410 nm, preferably 365-405 nm, and most preferably 380-400 nm.

The ink may be prepared by known methods such as stirring with a high-speed water-cooled stirrer, or milling on a horizontal bead-mill.

### Examples

The invention will now be described, with reference to the following examples which are not intended to be limiting.

### Example 1

The following inkjet inks were prepared by mixing the components in the amounts shown in Table 1. Amounts are given as weight percentages based on the total weight of the ink.

**Table 1.**

| **Components** | **Yellow Samples** | | |
|---|---|---|---|
| | **Formulation (%)** | | |
| CTFA | 30.00 | 30.00 | 30.00 |
| IBOA | 12.00 | 12.00 | 12.00 |
| NVC | 24.00 | 24.00 | 24.00 |
| DPHA | 5.00 | 5.00 | 5.00 |
| PEA | 5.20 | 5.50 | 5.50 |
| IRGACURE 819 | 2.80 | 2.80 | 2.80 |
| TPO | 2.80 | 2.80 | 2.80 |
| ITX | 4.00 | 4.00 | 4.00 |
| CN964 A85 | 5.00 | 5.00 | 5.00 |
| BT-40279 | 0.80 | 0.80 | 0.80 |
| Yellow millbase | 8.00 | 8.00 | 8.00 |
| UV12 | 0.40 | | |
| UV1 | | 0.10 | |
| UV2 | | | 0.10 |
| Total | 100.00 | 100.00 | 100.00 |

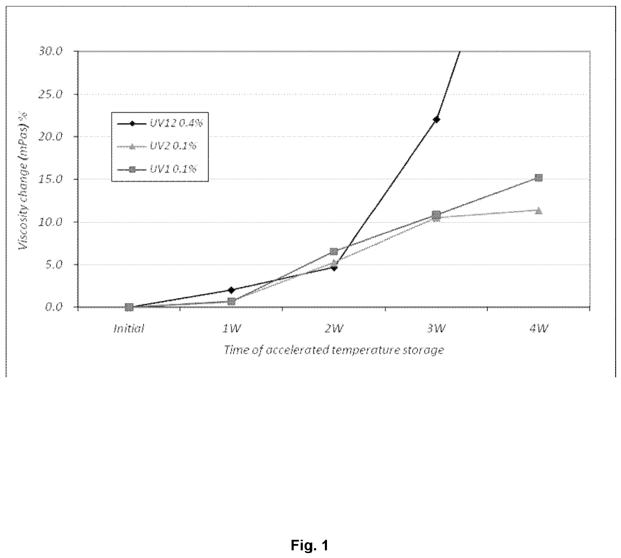

The stability of the inks was then tested by measurement of the viscosity of the inks at 60°C over time using an Anton Paar viscometer. Viscosity increase at 60°C overtime is a good measure of shelf-life prediction of room temperature storage and hence a measure of stability of the inks. The lower the viscosity, the more stable the ink. The results are set out in Fig. 1.

Fig. 1 shows that inks of the invention exhibit superior performance in comparison with a standard ink which comprises UV12 stabiliser.

The inks of the present invention comprising Florstab stabiliser UV1 or UV2 exhibit exceptional stability after 4 weeks at 60°C thermal exposure. This is in contrast to the comparative ink which shows unfavourable stability in comparison to the inks of the invention.

### Example 2

The following inkjet inks were prepared by mixing the components in the amounts shown in Table 2. Amounts are given as weight percentages based on the total weight of the ink.

**Table 2.**

| **Components** | **Black Samples** | |
|---|---|---|
| | **Formulation (%)** | |
| CTFA | 30.00 | 30.00 |
| IBOA | 12.00 | 12.00 |
| NVC | 24.00 | 24.00 |
| DPHA | 5.00 | 5.00 |
| PEA | 6.50 | 6.80 |
| IRGACURE 819 | 2.80 | 2.80 |
| TPO | 2.80 | 2.80 |
| ITX | 4.00 | 4.00 |
| CN964 A85 | 6.00 | 6.00 |
| Black millbase | 6.50 | 6.50 |
| UV12 | 0.40 | |
| UV1 | | 0.10 |
| Total | 100.00 | 100.00 |

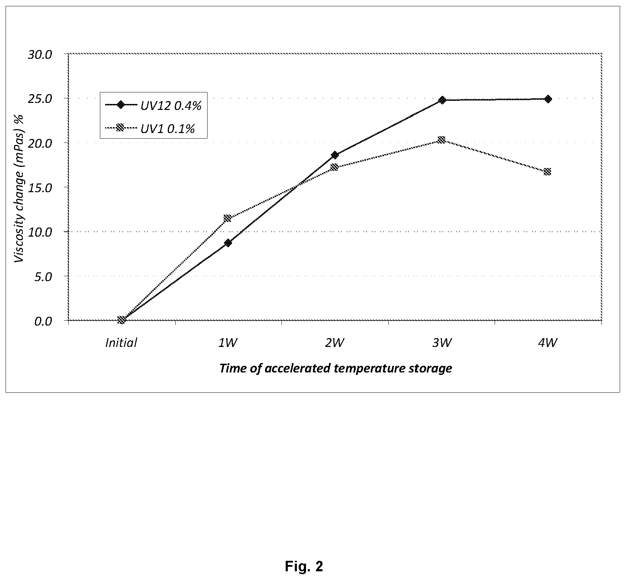

The stability of the inks was once again tested by measurement of the viscosity of the inks at 60°C over time using an Anton Paar viscometer. The results are set out in Fig. 2.

Fig. 2 shows that ink of the invention exhibits superior performance in comparison with a standard ink which comprises UV12 stabiliser.

The ink of the present invention comprising Florstab stabiliser UV1 exhibits exceptional stability after 4 weeks at 60°C thermal exposure. This is in contrast to the comparative ink comprising UV12 which show unfavourable stability in comparison to the inks of the invention.

### Example 3

The following inkjet inks were prepared by mixing the components in the amounts shown in Table 3. Amounts are given as weight percentages based on the total weight of the ink.

**Table 3.**

| **Components** | **Cyan Samples** | | |
|---|---|---|---|
| | **Formulation (%)** | | |
| CTFA | 30.00 | 30.00 | 30.00 |
| IBOA | 12.00 | 12.00 | 12.00 |
| NVC | 24.00 | 24.00 | 24.00 |
| DPHA | 5.00 | 5.00 | 5.00 |
| PEA | 4.40 | 4.70 | 4.70 |
| IRGACURE 819 | 2.80 | 2.80 | 2.80 |
| TPO | 2.80 | 2.80 | 2.80 |
| ITX | 4.00 | 4.00 | 4.00 |
| CN964 A85 | 6.00 | 6.00 | 6.00 |
| Cyan millbase | 8.60 | 8.60 | 8.60 |
| UV12 | 0.40 | | |
| UV1 | | 0.10 | |
| UV2 | | | 0.10 |
| Total | 100.00 | 100.00 | 100.00 |

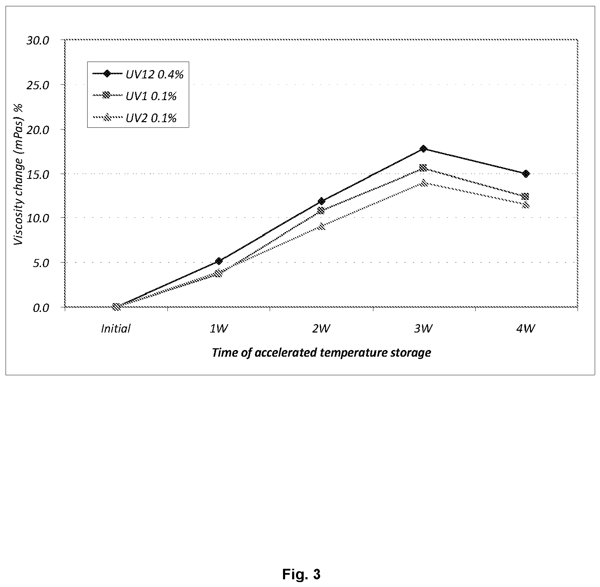

The stability of the inks was once again tested by measurement of the viscosity of the inks at 60°C over time using an Anton Paar viscometer. The results are set out in Fig. 3.

Fig. 3 shows that inks of the invention exhibit superior performance in comparison with a standard ink which comprises UV12 stabiliser.

The inks of the present invention comprising Florstab stabiliser UV1 or UV2 exhibit exceptional stability after 4 weeks at 60°C thermal exposure. This is in contrast to the comparative ink comprising UV12 which show unfavourable stability in comparison to the inks of the invention.

### Example 4

The following inkjet inks were prepared by mixing the components in the amounts shown in Table 4. Amounts are given as weight percentages based on the total weight of the ink.

**Table 4.**

| **Components** | **Magenta Samples** | |
|---|---|---|
| | **Formulation (%)** | |
| CTFA | 30.00 | 30.00 |
| IBOA | 12.00 | 12.00 |
| NVC | 24.00 | 24.00 |
| DPHA | 5.00 | 5.00 |
| PEA | 2.50 | 2.80 |
| IRGACURE 819 | 2.80 | 2.80 |
| TPO | 2.80 | 2.80 |
| ITX | 4.00 | 4.00 |
| CN964 A85 | 2.00 | 2.00 |
| Magenta millbase | 14.50 | 14.50 |
| UV12 | 0.40 | |
| UV1 | | 0.10 |
| Total | 100.00 | 100.00 |

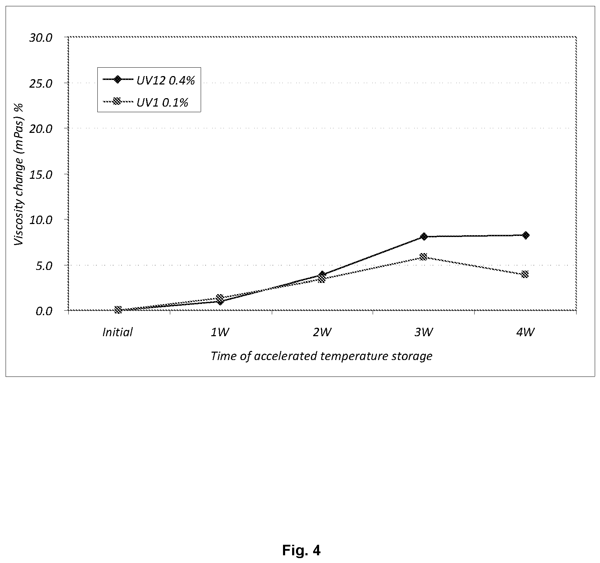

The stability of the inks was once again tested by measurement of the viscosity of the inks at 60°C overtime using an Anton Paar viscometer. The results are set out in Fig. 4.

Fig. 4 shows that ink of the invention exhibits superior performance in comparison with a standard ink which comprises UV12 stabiliser.

The ink of the present invention comprising Florstab stabiliser UV1 exhibits exceptional stability after 4 weeks at 60°C thermal exposure. This is in contrast to the comparative ink comprising UV12 which shows unfavourable stability in comparison to the inks of the invention.

### Example 5

The following inkjet inks were prepared by mixing the components in the amounts shown in Table 5. Amounts are given as weight percentages based on the total weight of the ink.

**Table 5.**

| **Components** | **Yellow Samples** | | |
|---|---|---|---|
| | **Formulation (%)** | | |
| CTFA | 30.00 | 30.00 | 30.00 |
| IBOA | 12.00 | 12.00 | 12.00 |
| NVC | 24.00 | 24.00 | 24.00 |
| DPHA | 5.00 | 5.00 | 5.00 |
| PEA | 5.20 | 5.50 | 5.50 |
| IRGACURE 819 | 2.80 | 2.80 | 2.80 |
| TPO | 2.80 | 2.80 | 2.80 |
| ITX | 4.00 | 4.00 | 4.00 |
| CN964 A85 | 5.00 | 5.00 | 5.00 |
| BT-40279 | 0.80 | 0.80 | 0.80 |
| Yellow millbase | 8.00 | 8.00 | 8.00 |
| UV12 | 0.40 | | |
| UV1 | | 0.10 | |
| UV2 | | | 0.10 |
| Total | 100.00 | 100.00 | 100.00 |

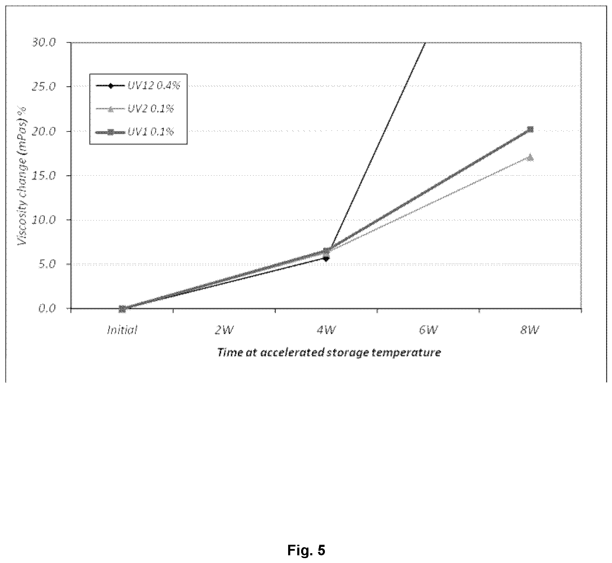

The stability of the inks was once again tested by measurement of the viscosity of the inks at 50°C over time using an Anton Paar viscometer. The results are set out in Fig. 5.

Fig. 5 shows that inks of the invention exhibit superior performance in comparison with a standard ink which comprises UV12 stabiliser.

The inks of the present invention comprising Florstab stabiliser UV1 or UV2 exhibit exceptional stability after 8 weeks at 50°C thermal exposure. This is in contrast to the comparative ink comprising UV12 which show unfavourable stability in comparison to the inks of the invention.

### Example 6

The following inkjet inks were prepared by mixing the components in the amounts shown in Table 2. Amounts are given as weight percentages based on the total weight of the ink.

**Table 6.**

| **Components** | **Black Samples** | |
|---|---|---|
| | **Formulation (%)** | |
| CTFA | 30.00 | 30.00 |
| IBOA | 12.00 | 12.00 |
| NVC | 24.00 | 24.00 |
| DPHA | 5.00 | 5.00 |
| PEA | 6.50 | 6.80 |
| IRGACURE 819 | 2.80 | 2.80 |
| TPO | 2.80 | 2.80 |
| ITX | 4.00 | 4.00 |
| CN964 A85 | 6.00 | 6.00 |
| Black millbase | 6.50 | 6.50 |
| UV12 | 0.40 | |
| UV1 | | 0.10 |
| Total | 100.00 | 100.00 |

The stability of the inks was once again tested by measurement of the viscosity of the inks at 50°C over time using an Anton Paar viscometer.

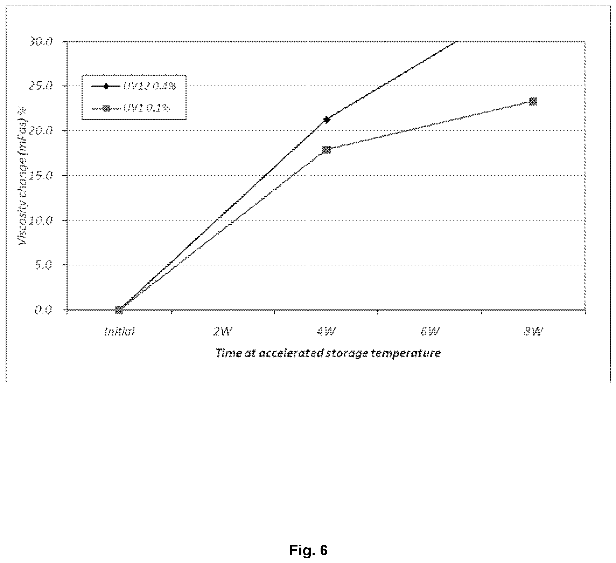

The results are set out in Fig. 6.

Fig. 6 shows that ink of the invention exhibits superior performance in comparison with a standard ink which comprises UV12 stabiliser.

The ink of the present invention comprising Florstab stabiliser UV1 exhibits exceptional stability after 8 weeks at 50°C thermal exposure. This is in contrast to the comparative ink comprising UV12 which show unfavourable stability in comparison to the inks of the invention.

### Example 7

The following inkjet inks were prepared by mixing the components in the amounts shown in Table 7. Amounts are given as weight percentages based on the total weight of the ink.

**Table 7.**

| **Components** | **Cyan Samples** | | |
|---|---|---|---|
| | **Formulation (%)** | | |
| CTFA | 30.00 | 30.00 | 30.00 |
| IBOA | 12.00 | 12.00 | 12.00 |
| NVC | 24.00 | 24.00 | 24.00 |
| DPHA | 5.00 | 5.00 | 5.00 |
| PEA | 4.40 | 4.70 | 4.70 |
| IRGACURE 819 | 2.80 | 2.80 | 2.80 |
| TPO | 2.80 | 2.80 | 2.80 |
| ITX | 4.00 | 4.00 | 4.00 |
| CN964 A85 | 6.00 | 6.00 | 6.00 |
| Cyan millbase | 8.60 | 8.60 | 8.60 |
| UV12 | 0.40 | | |
| UV1 | | 0.10 | |
| UV2 | | | 0.10 |
| Total | 100.00 | 100.00 | 100.00 |

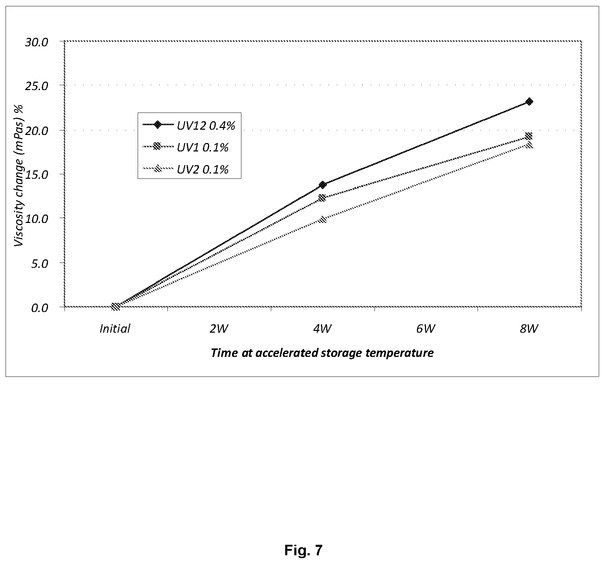

The stability of the inks was once again tested by measurement of the viscosity of the inks at 50°C over time using an Anton Paar viscometer. The results are set out in Fig. 7.

Fig. 7 shows that inks of the invention exhibit superior performance in comparison with a standard ink which comprises UV12 stabiliser.

The inks of the present invention comprising Florstab stabiliser UV1 or UV2 exhibit exceptional stability after 8 weeks at 50°C thermal exposure. This is in contrast to the comparative ink comprising UV12 which show unfavourable stability in comparison to the inks of the invention.

### Example 8

The following inkjet inks were prepared by mixing the components in the amounts shown in Table 8. Amounts are given as weight percentages based on the total weight of the ink.

**Table 8.**

| **Components** | **Magenta Samples** | | |
|---|---|---|---|
| | **Formulation (%)** | | |
| CTFA | 30.00 | 30.00 | 30.00 |
| IBOA | 12.00 | 12.00 | 12.00 |
| NVC | 24.00 | 24.00 | 24.00 |
| DPHA | 5.00 | 5.00 | 5.00 |
| PEA | 2.50 | 2.80 | 2.80 |
| IRGACURE 819 | 2.80 | 2.80 | 2.80 |
| TPO | 2.80 | 2.80 | 2.80 |
| ITX | 4.00 | 4.00 | 4.00 |
| CN964 A85 | 2.00 | 2.00 | 2.00 |
| Magenta millbase | 14.50 | 14.50 | 14.50 |
| UV12 | 0.40 | | |
| UV1 | | 0.10 | |
| UV2 | | | 0.10 |
| Total | 100.00 | 100.00 | 100.00 |

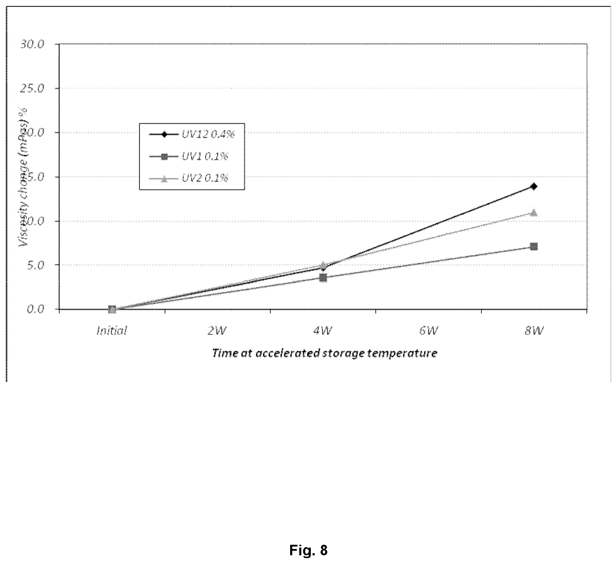

The stability of the inks was once again tested by measurement of the viscosity of the inks at 50°C over time using an Anton Paar viscometer. The results are set out in Fig. 8.

Fig. 8 shows that ink of the invention exhibits superior performance in comparison with a standard ink which comprises UV12 stabiliser.

The inks of the present invention comprising Florstab stabiliser UV1 or UV2 exhibit exceptional stability after 8 weeks at 50°C thermal exposure. This is in contrast to the comparative ink comprising UV12 which show unfavourable stability in comparison to the inks of the invention.

## Claims

1. An inkjet ink comprising a radiation-curable (meth)acrylate monomer, an N-vinyl amide, an acyl phosphine oxide UV photoinitiator and a carbamodithioic acid or a salt or thioester thereof.

2. An inkjet ink as claimed in claim 1, wherein carbamodithioic acid or a salt or thioester thereof is selected from N,N-dimethyl carbamodithioic acid copper salt, zinc dibutyldithiocarbamate or mixtures thereof.

3. An inkjet ink as claimed in claims 1 or 2, wherein the carbamodithioic acid or a salt or thioester thereof is present from 0.05 to 0.2 wt %, based on the total amount of the inkjet ink.

4. An inkjet ink as claimed in any preceding claim, wherein the carbamodithioic acid or a salt or thioester thereof is present from 0.1 to 0.2 wt %, based on the total amount of the inkjet ink.

5. An inkjet ink as claimed in any preceding claim, wherein the N-vinyl amide is N-vinyl caprolactam (NVC).

6. An inkjet ink as claimed in any preceding claim, wherein the acyl phosphine oxide UV photoinitiator is selected from 2,4,6-trimethylbenzoyl-diphenyl-phosphineoxide (TPO), bis(2,6-dimethylbenzoyl)-2,4,4-trimethylpentylphosphine oxide (Irg 819), ethyl-2,4,6-trimethylbenzoyl-phenyl-phosphine oxide (liquid TPO) or mixtures thereof.

7. An inkjet ink as claimed in any preceding claim, wherein the radiation-curable (meth)acrylate monomer comprises a monofunctional (meth)acrylate monomer.

8. An inkjet ink as claimed in claim 7, wherein the monofunctional (meth)acrylate monomer is selected from phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA), lauryl acrylate or mixtures thereof.

9. An inkjet ink as claimed in any preceding claim, wherein the radiation-curable (meth)acrylate monomer comprises a multifunctional (meth)acrylate monomer.

10. An inkjet ink as claimed in claim 9, wherein the multifunctional (meth)acrylate monomer is selected from hexanediol diacrylate, trimethylolpropane triacrylate, pentaerythritol triacrylate, polyethyleneglycol diacrylate, dipropyleneglycol diacrylate, tri(propylene glycol) triacrylate, neopentylglycol diacrylate, bis(pentaerythritol) hexa-acrylate, 3-methyl pentanediol diacrylate, the acrylate esters of ethoxylated or propoxylated glycols and polyols, hexanediol dimethacrylate, trimethylolpropane trimethacrylate, triethyleneglycol dimethacrylate, diethyleneglycol dimethacrylate, ethyleneglycol dimethacrylate, 1,4-butanediol dimethacrylate, dipentaerythritol hexaacrylate or mixtures thereof.

11. An inkjet ink as claimed in any preceding claim, wherein the inkjet ink is substantially free of water and volatile organic solvents.

12. An inkjet ink as claimed in any preceding claim, wherein the inkjet ink further comprises a colouring agent.

13. A method of inkjet printing, comprising printing the inkjet ink as claimed in any preceding claim on to a substrate and curing the ink.

14. A substrate having the inkjet ink as claimed in any of claims 1 to 12 printed thereon.

## Patentansprüche

1. Drucktinte, umfassend ein strahlenhärtbares (Meth)acrylatmonomer, ein N-Vinylamid, einen Acylphosphinoxid-UV-Photoinitiator und eine Carbamodithiosäure oder ein Salz oder Thioester davon.

2. Drucktinte nach Anspruch 1, wobei die Carbamodithiosäure oder ein Salz oder Thioester davon ausgewählt ist aus N,N-Dimethyl-carbamodithiosäure-Kupfersalz, Zink-Dibutyldithiocarbamat oder Mischungen davon.

3. Drucktinte nach Anspruch 1 oder 2, wobei die Carbamodithiosäure oder ein Salz oder Thioester davon von 0,05 bis 0,2 Gew.-%, auf der Grundlage der Gesamtmenge der Drucktinte, vorhanden ist.

4. Drucktinte nach einem der vorstehenden Ansprüche, wobei die Carbamodithiosäure oder ein Salz oder Thioester davon von 0,1 bis 0,2 Gew.-%, auf der Grundlage der Gesamtmenge der Drucktinte, vorhanden ist.

5. Drucktinte nach einem der vorstehenden Ansprüche, wobei das N-Vinylamid N-vinylamidcaprolactam (NVC) ist.

6. Drucktinte nach einem der vorstehenden Ansprüche, wobei der Acylphosphinoxid-UV-Photoinitiator ausgewählt ist aus 2,4,6-Trimethylbenzoyl-diphenyl-phosphinoxid (TPO), bis(2,6-Dimethylbenzoyl)-2,4,4-trimethylpentylphosphinoxid (Irg 819), Ethyl-2,4,6-trimethylbenzoyl-phenyl-phosphinoxid (flüssiges TPO) oder Mischungen davon.

7. Drucktinte nach einem der vorstehenden Ansprüche, wobei das strahlenhärtbare (Meth)acrylatmonomer ein mono funktionales (Meth)acrylatmonomer umfasst.

8. Drucktinte nach Anspruch 7, wobei das mono funktionale (Meth)acrylatmonomer ausgewählt ist aus Phenoxyethylacrylat (PEA), zyklischem TMP-formal-acrylat (CTFA), Isobornyl-acrylat (IBOA), Tetrahydrofurfuryl-acrylat (THFA), 2-(2-Ethoxyethoxy)ethyl-acrylat, Octadecyl-acrylat (ODA), Tridecyl-acrylat (TDA), Isodecyl-acrylat (IDA), Lauryl-acrylat oder Mischungen davon.

9. Drucktinte nach einem der vorstehenden Ansprüche, wobei das strahlenhärtbare (Meth)acrylatmonomer ein mono funktionales (Meth)acrylatmonomer umfasst.

10. Drucktinte nach Anspruch 9, wobei das mono funktionale (Meth)acrylatmonomer ausgewählt ist aus Hexandiol-diacrylat, Trimethylolpropan-triacrylat, Pentaerythritol-triacrylat, Polyethylenglycol-diacrylat, Dipropylenglycol-diacrylat, Tri(propylen-glycol)-triacrylat, Neopentylglycol-diacrylat, bis(Pentaerythritol)-hexa-acrylat, 3-Methyl-pentandiol-diacrylat, den Acrylatestern von ethoxylierten oder propoxylierten Glykolen und Polyolen, Hexandiol-dimethacrylat, Trimethylolpropan-trimethacrylat, Triethylenglycol-dimetahcrylat, Diethylenglycol-dimethacrylat, Ethylenglycol-dimethacrylat, 1,4-Butandiol-dimethacrylat, Dipentaerythritol-hexaacrylat oder Mischungen davon.

11. Drucktinte nach einem der vorstehenden Ansprüche, wobei die Drucktinte im Wesentlichen frei von Wasser und volatilen organischen Lösungsmitteln ist.

12. Drucktinte nach einem der vorstehenden Ansprüche, wobei die Drucktinte ferner ein Färbemittel umfasst.

13. Verfahren zum Tintendrucken, umfassend das Drucken der Drucktinte nach einem der vorstehenden Ansprüche auf ein Substrat und das Härten der Tinte.

14. Substrat mit darauf gedruckter Drucktinte nach einem der Ansprüche 1 bis 12.

## Revendications

1. Encre pour jet d'encre comprenant un monomère (méth)acrylate durcissable par rayonnement, un amide de N-vinyle, un photo-initiateur UV de type oxyde d'acylphosphine et un acide carbamodithioïque ou un sel ou thioester de celui-ci.

2. Encre pour jet d'encre selon la revendication 1, l'acide carbamodithioïque ou un sel ou thioester de celui-ci étant sélectionné parmi sel de cuivre d'acide carbamodithioïque N,N-diméthyle, dibutyldithiocarbamate de zinc ou des mélanges de ceux-ci.

3. Encre pour jet d'encre selon la revendication 1 ou 2, l'acide carbamodithioïque ou le sel ou thioester de celui-ci étant présent de 0,05 à 0,2 % en poids, selon la quantité totale d'encre pour jet d'encre.

4. Encre pour jet d'encre selon l'une quelconque des revendications précédentes, l'acide carbamodithioïque ou le sel ou thioester de celui-ci étant présent de 0,1 à 0,2 % en poids, selon la quantité totale d'encre pour jet d'encre.

5. Encre pour jet d'encre selon l'une quelconque des revendications précédentes, où l'amide N-vinyle est caprolactame de N-vinyle (NVC).

6. Encre pour jet d'encre selon l'une quelconque des revendications précédentes, le photo-initiateur UV de type oxyde d'acylphosphine étant sélectionné parmi oxyde de diphényl(2,4,6- triméthylbenzoyl)phosphine (TPO), oxyde bis(2,6-diméthylbenzoyle)-2,4,4-triméthylpentylphosphine (Irg 819), oxyde d'éthyl-2,4,6-triméthylbenzoyle- phényl-phosphine (TPO liquide) ou des mélanges de ceux-ci.

7. Encre pour jet d'encre selon l'une quelconque des revendications précédentes, le monomère (méth)acrylate durcissable par rayonnement comprenant un monomère (méth)acrylate mono fonctionnel.

8. Encre pour jet d'encre selon la revendication 7, le monomère (méth)acrylate monofonctionnel étant sélectionné parmi phénoxyéthyl acrylate (PEA), acrylate cyclique TMP formal (CTFA), acrylate isobornyle (IBOA), acrylate tétrahydrofurfuryle (THFA), acrylate 2-(2-éthoxyéthoxy)éthyle, acrylate octadécyle (ODA), acrylate tridécyle (TDA), crylate isodécyle (IDA), acrylate lauryle, ou des mélanges de ceux-ci.

9. Encre pour jet d'encre selon l'une quelconque des revendications précédentes, le monomère (méth)acrylate durcissable par rayonnement comprenant un monomère (méth)acrylate multifonctionnel.

10. Encre pour jet d'encre selon la revendication 9, le monomère (méth)acrylate multifonctionnel étant sélectionné parmi hexanediol diacrylate, triméthylolpropane triacrylate, pentaérythritol triacrylate, polyéthylèneglycol diacrylate, dipropylèneglycol diacrylate, tri(propylène glycol) triacrylate, néopentylglycol diacrylate, bis(pentaérythritol) hexa-acrylate, 3-méthyl pentanediol diacrylate, esters acrylates de glycols et polyols éthoxylés ou propoxylés, hexanédiol diméthacrylate, triméthylolpropane triméthacrylate, triéthylèneglycol diméthacrylate, diéthylèneglycol diméthacrylate, éthylèneglycol diméthacrylate, 1,4-butanediol diméthacrylate, dipentaérythritol hexaacrylate ou des mélanges de ceux-ci.

11. Encre pour jet d'encre selon l'une quelconque des revendications précédentes, l'encre étant sensiblement exempte d'eau et de solvants organiques volatils.

12. Encre pour jet d'encre selon l'une quelconque des revendications précédentes, l'encre comprenant en outre un agent colorant.

13. Procédé d'impression à jet d'encre, comprenant l'impression de l'encre pour jet d'encre selon l'une quelconque des revendications précédentes sur un support et le durcissement de l'encre.

14. Support sur lequel est imprimé l'encre pour jet d'encre selon l'une quelconque des revendications 1 à 12.
